# EUROPEAN PATENT SPECIFICATION

(11) **EP 3 875 809 B1**
(45) Date of publication and mention of the grant of the patent: **01.05.2024**
(21) Application number: 20161289.2
(22) Date of filing: 05.03.2020
(51) Int. Cl.: B62D 25/24, F16J 15/02, F16J 15/10, F16J 13/02

(54) **SEALING PLUG**
DICHTUNGSSTOPFEN
BOUCHON D'OBTURATION

(43) Date of publication of application: 08.09.2021
(73) Proprietor: Illinois Tool Works, Inc., Glenview, Illinois 60025 (US)
(72) Inventor: ARTETA, Javier, Illinois, 60025 (US); VENTALLO, Josep, Illinois, 60025 (US)
(74) Representative: HGF

(56) References cited:
- FR-A1- 2 519 723
- US-A- 5 653 447
- US-A1- 2002 017 009
- US-A1- 2002 194 710
- US-A1- 2006 086 765

## Description

The present invention relates to a sealing plug. In particular, the present invention relates to a sealing plug for engagement with an orifice of a panel body, to seal against the passage of a fluid through the panel body.

### Background

It is generally known in the automotive sector to use sealing plugs, such as those discussed in US2002/017009A1, US 2002/194710 A1, and FR2519723 A1, to seal openings in the panel body of automobiles for the prevention of unwanted dirt or water from entering. In addition to preventing an ingress of unwanted dirt or water, the provision of sealing plugs are used to seal the opening to make it watertight. Traditionally, sealing plugs are attached in place using fasteners or adhesive in order to fix the sealing plug in place. However, such attachment of the plugs may be permanent, or difficult to assemble and remove. For example, it may be difficult to access the inner portions of the opening, and may therefore be difficult to install or to remove the sealing plug quickly and easily.

Sealing plugs have been developed which are quicker and easy to install. Sealings plugs are generally provided with a plug body, which is the portion of the sealing plug that is inserted into the opening of a car panel. The sealing plugs are provided additionally with a sealing portion that engages with the surface of the panel body outside of the opening to provide a desired sealing of the sealing plug. An outer wall portion is used to support the sealing portion. Sealing plugs may be formed in different shapes and sizes. They may be circular in some designs, and may alternatively be track-shaped. Many of the existing sealing plugs have a high stiffness. This makes the insertion of the sealing plug into an opening difficult, resulting from very high insertion forces required. Moreover, the removal of the sealing plug from the opening once installed may require high forces. This makes the installation and removal of these sealing plugs difficult and inefficient.

US2002/017009A1 discloses a sealing plug according to the preamble of claim 1.

It would be desirable to provide a sealing plug that can alleviate or mitigate one or more of the aforementioned problems. Particularly, it is an object of the invention to provide a sealing plug that has a reduced force requirement for inserting the sealing plug into an orifice or opening. It is another object of the invention to provide a sealing plug with improved sealing properties. It is a further object of the invention to provide a sealing plug that facilitates an improved ease of assembly and removal.

The present invention provides at least an alternative to sealing plugs of the prior art.

### Summary of the Invention

In accordance with the present invention there is provided a sealing plug according to the appended claims.

According to an aspect of the present invention, there is provided a sealing plug for engagement with an orifice of a panel body to seal against the passage of fluid therethrough in accordance with claim 1. The sealing plug comprises a body member having a central axis extending therethrough, and having a collar portion protruding radially outward from an outer surface of the body member with respect to the central axis. The sealing also comprises an annular sealing member fixedly attached to a lower surface of the collar portion coaxial with the central axis, having a base portion, configured to fixedly engage with the lower surface of the collar portion, and an engagement portion, facing away from the lower surface and adapted to sealingly engage with the panel body, during use, wherein the engagement portion is provided with a grooved surface profile.

Thus, the stiffness of the plug is reduced. The provision of a grooved surface profile allows the sealing plug to be made more flexible. This is particularly advantageous because the insertion force required to insert the sealing plug into an orifice or a hole is decreased. Less force is required to install the sealing plug in place. When the sealing plug is installed in place, the increased flexibility of the sealing plug allows it to flex and urge against the edge of the sides of the orifice, filling the orifice. Moreover, the sealing plug can be used in a larger range of applications, such as where the orifice may not be the same size as the sealing plug.

The engagement portion comprises a plurality of spaced apart teeth members, arranged along at least a portion of a perimeter of the annular sealing member. This provides the advantage of further reducing the stiffness of the sealing plug, allowing the annular sealing member to deform when the sealing plug is inserted into or removed from the panel body orifice. This is particularly beneficial because it reduces the force required during the installation and removal of the sealing plug.

Advantageously in some embodiments, the plurality of teeth members are equidistantly spaced apart from one another along the entire perimeter of the annular sealing member. By spacing apart the plurality of teeth members equidistantly from one another along the entire perimeter of the annular sealing member, an improved uniformity of sealing is provided. Additionally, spaced apart plurality of teeth members allow the annular sealing member to elastically deform in a uniform manner. That is, the provision of spaced apart teeth members allow the entire perimeter of the annular sealing member to deform in substantially the same way, and have the same extent of deformation.

Advantageously in some embodiments, the plurality of teeth members protrude from the base portion in a direction substantially parallel to the central axis so as to form radially aligned grooves between the plurality of teeth members. This is particularly advantageous because the plurality of teeth members are directed towards the panel body orifice, placing the teeth members into proximity with the orifice to provide a sealing function. The provision of radially aligned grooves is beneficial as this improves the uniformity of sealing.

Advantageously in some embodiments, the base portion and the plurality of teeth members are integral parts of the annular sealing member. By providing the base portion and the teeth members as integral parts of the annular sealing member, the ease of assembly and removal of the sealing plug are removed. Particularly, the annular sealing member is formed of less parts which makes assembly and removal simpler.

Advantageously in some specific embodiments, the base portion has a predetermined thickness. By providing the base portion with a predetermined thickness, the position of the annular sealing member, and particularly the engagement portion thereof, can be selected depending on the application and desired sealing properties of the sealing plug.

Advantageously in some embodiments, when in use, the annular sealing member is resiliently deformable in a direction parallel to the central axis by applying a predetermined insertion force to the sealing plug. By providing an annular sealing member that is resiliently deformable, it has been found that the insertion force required to insert the sealing plug into the orifice is reduced.

Advantageously in some embodiments, the predetermined insertion force is defined by the grooved surface profile of the engagement portion. For example, the grooved surface profile may provide an insertion force that is lower than a corresponding sealing plug not having a grooved surface profile. The insertion force may be reduced in comparison. The provision of a grooved surface profile is advantageous because it facilitates an improved ease of assembly and removal of the sealing plug into and from the panel body orifice.

Advantageously in some embodiments, the annular sealing member is configured to melt at a predetermined temperature so as to fill any gaps between the sealing plug and the panel body during engagement. By having an annular sealing member that can melt at a predetermined temperature, the annular sealing member can flow into any gaps to provide improved sealing properties. This further prevents the passage of a fluid through the panel body.

### Brief Description of the Drawings

Embodiments of the invention are now described, by way of example only, hereinafter with reference to the accompanying drawings, in which:
**Figure 1** illustrates a schematic perspective view of a sealing plug according to an embodiment;
**Figure 2** illustrates a schematic view of the sealing plug of Figure 1 ;
**Figure 3** illustrates a schematic perspective view of a sealing plug according to another embodiment;
**Figure 4** illustrates a schematic view showing a portion of a sealing plug according to an embodiment, in a first configuration;
**Figure 5** illustrates a schematic view of the sealing plug portion of Figure 4, in a second configuration;
**Figure 6** illustrates a schematic view of an annular sealing member of the sealing plug portion of Figure 4;
**Figure 7** illustrates a schematic view showing a portion of a sealing plug according to another embodiment, in a first configuration;
**Figure 8** illustrates a schematic view of the sealing plug portion of Figure 7, in a second configuration;
**Figure 9** illustrates a schematic view showing a portion of a sealing plug according to a further embodiment, in a first configuration; and
**Figure 10** illustrates a schematic view of the sealing plug portion of Figure 9, in a second configuration.

### Detailed Description

The described example embodiment relates to a sealing plug, and particularly a sealing plug for engagement with an orifice of a panel body. The invention is, however, not limited to a sealing plug for engagement with an orifice of a panel body. For example, the sealing may be for engagement with an opening of any surface having a thickness such as for example, a wall.

As used herein, the term "grooved surface" is used to describe an exterior boundary of a component, or a part of a component, that is rippled or otherwise has a series of ridges or depressions. The grooved surface may be a non-uniform surface.

As used herein, the term "equidistantly spaced" is used to describe the separation of a plurality of elements that are of equal distance to one another. For example, the separation distance between a first element and a second element may be equal to the separation distance between a second element and a third element. The term "equidistantly spaced" may refer an angular displacement that is equal between a plurality of elements.

As used herein, the term "melt" is used to describe the change from a solid state into a liquid state. The term "melt" may also refer to the physical substance resultant from such a change of state. The melt may flow or otherwise move from one location to another.

Certain terminology is used in the following description for convenience only and is not limiting. The words 'right', 'left', 'lower', 'upper', 'front', 'rear', 'upward', 'down' and 'downward' designate directions in the drawings to which reference is made and are with respect to the described component when assembled and mounted. The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, "first", "second", "third" etc. merely indicate that different instances of like objects are being referred to and are not intended to imply that the objects so described must be in a given sequence, either temporally, spatially, in ranking or in any other manner.

Like reference numerals are used to depict like features throughout.

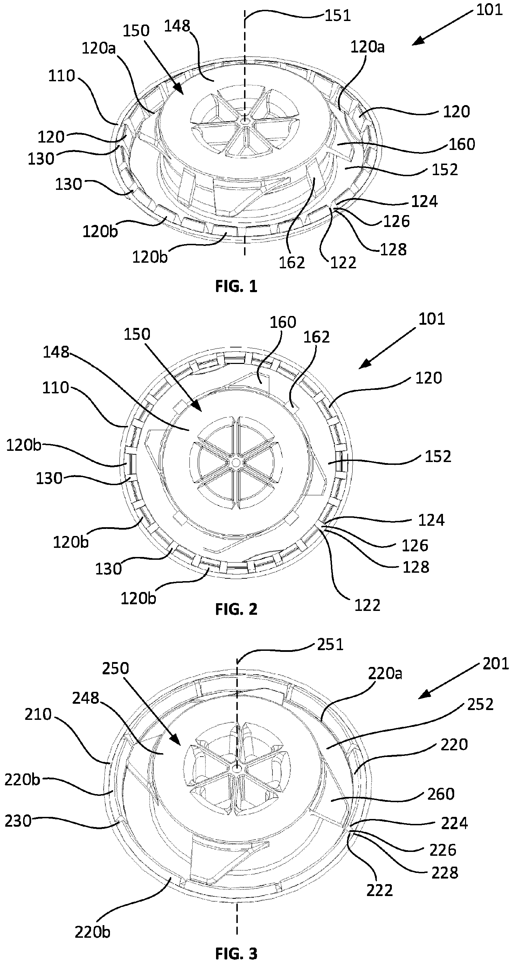

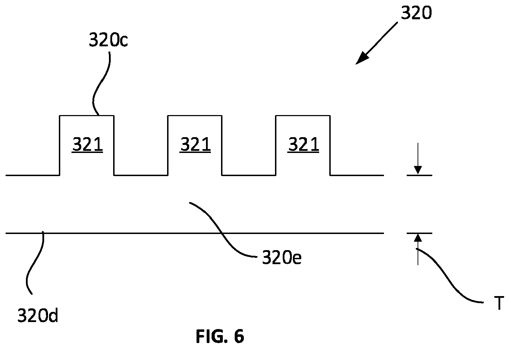

Referring firstly to Figures 1 and 2, there is shown a sealing plug 101. The sealing plug 101 is provided with a body member 150 having a central axis 151 extending through the body member 150. The body member 150 is generally cylindrical in shape. A collar portion 152 is provided on an outer edge of the body member 150 which protrudes radially outwardly from the body member 150, with respect to the central axis 151. The collar portion 152 protrudes away from the body member 150 in a direction radially outward of the central axis 151. The collar portion 152 has a surface that is provided with a sealing member 120. The sealing member 120 is annular in shape, having an inner facing surface 320c (see also Figure 6), an outer facing surface 320d, and a thickness 320e defined between the inner and outer facing surfaces 320c,320d having a thickness denoted "T". The central axis 151 of the body member 150 is closer to the inner facing surface in comparison with the outer facing surface 320d.

The annular sealing member 120 is fixed to a lower surface of the collar portion 152. The annular sealing member 120 is coaxial with the body member 150, both sharing a common central axis 151. The annular sealing member 120 may be adhered to the collar portion 152 using an adhesive. In some embodiments, the annular sealing member 120 is integrally formed with the collar portion 152. The sealing plug 101 is provided with a lip 110 defining an outer wall on the peripheral edge of the sealing plug 101. The lip 110 is connected to and supports the outer facing surface 320d of the annular sealing member 120. The annular sealing member 120 may slot in a recess defined between the collar portion 152 and the lip 110. In some embodiments, the lip 110 is shaped and sized so as to receive the annular sealing member 120 therein.

The body member 150 has a plug body 148 protruding downward in a direction away from the collar portion 152. The plug body 148 is provided with a number of protrusions 160 which are designed to engage with the orifice when the sealing plug 101 is inserted therein. The plug body 148 is provided with a number of tabs 162. The protrusions 160 and the tabs 162 may resiliently bias against the orifice while the plug body 148 of the sealing plug 101 is inserted into the orifice of the panel body, during use.

The annular sealing member 120 has a base portion 120a. The base portion 120a is arranged on the lower surface of the collar portion 152. The base portion 120a faces the lower surface of the collar portion 152. The thickness of the base portion 120a may be 1 millimetre in this example embodiment, but the base portion 120a may have a different thickness in other example embodiments. The thickness of the base portion 120a can be selected depending on the desired sealing properties of the annular sealing member 120. The thickness of the base portion 120a may be selected depending on the application, such as on the application of the sealing plug 101. The annular sealing member 120 is provided with an engagement portion 120b on a side distal to the collar portion 152. The engagement portion 120b faces away from the lower surface of the collar portion 152. The thickness of the base portion 120a may determine the distance of protrusion of the engagement portion 120b away from the collar portion 152. In this particular embodiment, the annular sealing member 120 is angled away from the central axis 151, such that the radial displacement of the engagement portion 120b from the central axis 151 is greater than the radial displacement of the base portion 120a from the central axis 151. The lip 110 is likewise angled away from the central axis 151.

The engagement portion 120b of the annular sealing member 120 extends beyond the lip 110. The engagement portion 120b is provided with a grooved surface profile. The grooved surface profile of the engagement portion 120b is a discontinuous surface. The grooved surface profile is formed from a series of teeth members (321, see Figure 2 and Figure 6) and grooves 130. The teeth members formed on the engagement portion 120b and the grooves 130 alternate around the perimeter of the annular sealing member 120. In the present embodiment shown, a plurality of teeth members are provided and arranged along the entire perimeter of the annular sealing member 120. The plurality of teeth members formed on the engagement portion 120b of the annular sealing member 120 may be spaced apart only along a portion of the perimeter of the annular sealing member 120. The teeth members are equidistantly spaced apart such that the grooves 130 formed therebetween are equally sized. In this particular embodiment shown, 24 teeth members are provided on the engagement portion 120b of the annular sealing member 120, and the same number of grooves 130 are provided. In some embodiments, the plurality of teeth members and the base portion 120a are integral parts of the annular sealing member 120. Each groove 130 is provided with a main surface 128, a first side 122, a second side 124 and a cavity 126 defined between the first side 122 and the second side 124. In some embodiments, a portion of the annular sealing member 120 is formed between the main surface 128 and the lip 110. In other embodiments, the engagement portion 120b of the annular sealing member 120 is void between two consecutive teeth members, or between the first side 122 and the second side 124.

A groove 130 is provided between consecutive teeth members (321, see Figure 2 and Figure 6). The teeth members 321 of the engagement portion 120b protrude in a downward direction away from the collar portion 152 in a direction that is generally parallel to the central axis 151. In this particular embodiment, the teeth members of the engagement portion 120b are offset from the central axis 151. That is, the teeth members protrude downwardly but are angularly offset from the central axis 151 by a few degrees. The radial displacement of the teeth members from the central axis 151 is greater than the radial displacement of the base portion 120a from the central axis 151. The grooves 130 provided between the teeth members are radially aligned.

In use, the sealing plug 101 is inserted into an orifice of a panel body (not shown) with the body member 150 facing the orifice. The plug body 148 is inserted into the orifice, while the annular sealing member 120 and lip 110 remain outside of the orifice. The collar portion 152 may remain outside of the panel body orifice. The protrusions 160 and tabs 162 engage with the internal surface of the orifice. When the plug body 148 is inserted into the orifice, the protrusions 160 and tabs 162 urge against the internal surface of the orifice. The protrusions 160 and tabs 162 may resiliently bias against the internal surface of the orifice so as to provide a resistive force against removing the sealing plug 101 from the orifice. After the plug body 148 has been inserted into the orifice, the engagement portion 120b of the annular sealing member 120 engages with the panel body (not shown). The annular sealing member 120 may flex when a force is applied to the sealing plug 101 to insert the sealing plug 101 into the orifice. The provision of an engagement portion 120b having a grooved surface profile increases the flexibility of the annular sealing member 120, which reduces the force required to insert the sealing plug 101 into the panel body orifice. In some embodiments, when a force is applied to insert the sealing plug 101 into the orifice, the annular sealing member 120 resiliently deforms in a direction that is substantially parallel to the central axis 151.

Referring now to Figure 3, there is provided a sealing plug 201 that is substantially the same as the sealing plug 101 of Figures 1 and 2. Sealing plug 201 is provided with an annular sealing member 220 having a base portion 220a provided on the lower surface a collar portion 252, facing the collar portion 252. The annular sealing member 220 has an engagement portion 220b facing away from the collar portion 252. The engagement portion 220b is provided with a grooved surface profile formed from a series of teeth members and grooves 230. The teeth members formed on the engagement portion 220b and the grooves 230 alternate around the perimeter of the annular sealing member 220. In this embodiment, eight teeth members are provided on the engagement portion 220b. A groove is provided between consecutive teeth members, such that eight grooves 230 are provided.

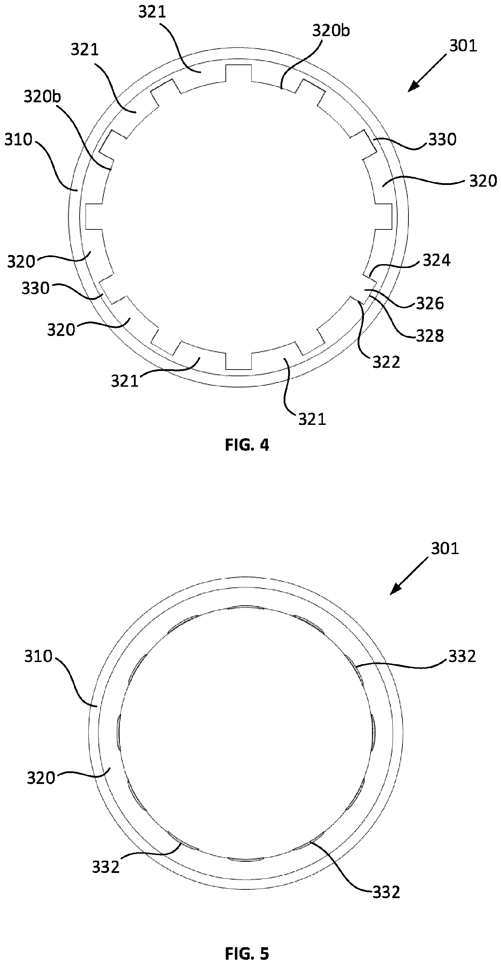

Figure 4 shows a sealing plug 301 that is substantially the same as sealing plug 201 in Figure 3. However, engagement portion 320b of the annular sealing member 320 is provided with a grooved surface profile that is formed from a series of twelve teeth members 321 and twelve grooves 330. Each groove 330 is arranged between two consecutive teeth members 321. The teeth members 321 formed on the engagement portion 320b and the grooves 330 alternate around the perimeter of the annular sealing member 320. Additionally, in Figure 4 the body member is removed in order to more readily illustrate the sealing function of the sealing plug 301. Each groove 330 formed on the surface of the engagement portion 320b is provided with a main surface 328, a first side 322, a second side 324 and a cavity 326 defined between the first side 322 and the second side 324. In the embodiment shown, a portion of the annular sealing member 320 is formed between the main surface 328 and the lip 310. In other embodiments, the engagement portion 320b may be void between the first side 322 and the second side 324. A portion of the annular sealing member 320 is shown in more detail in Figure 6.

The annular sealing member 320 is formed of a material having a lower melting temperature compared to the body member 350. In this particular embodiment, the annular sealing member 320 is formed from a polymer material. It is, however, envisaged that the annular sealing member 320 may be formed from a material other than a polymer material, having a low melting temperature. When the sealing plug 301 is subject to a predetermined temperature higher than the melting temperature of the material of the annular sealing member 320, the annular sealing member 320 may melt, while the rest of the sealing plug 301 does not. The predetermined temperature may for example, be a temperature that the panel body of a vehicle reaches when the engine of the vehicle is running. The predetermined temperature may be 40 degrees Celsius in some embodiments. The predetermined temperature may be a higher temperature such as 60 degrees Celsius, for example.

Figure 5 shows the sealing plug 301 when a predetermined temperature is reached. The annular sealing member 320 melts. When this happens, the engagement portion 320b of the annular sealing member 320 flows into the groove 330 formed on the grooved surface profile generally at a region denoted by the numeral 332. The flow of the annular sealing member 320 into the groove 330 fills the groove 330. Thus, the cavity 326 formed is filled with the annular sealing member 320 melt material. When the annular sealing member 320 engages with the panel body, there is provided a fluid tight seal, preventing the passage of fluid through the orifice.

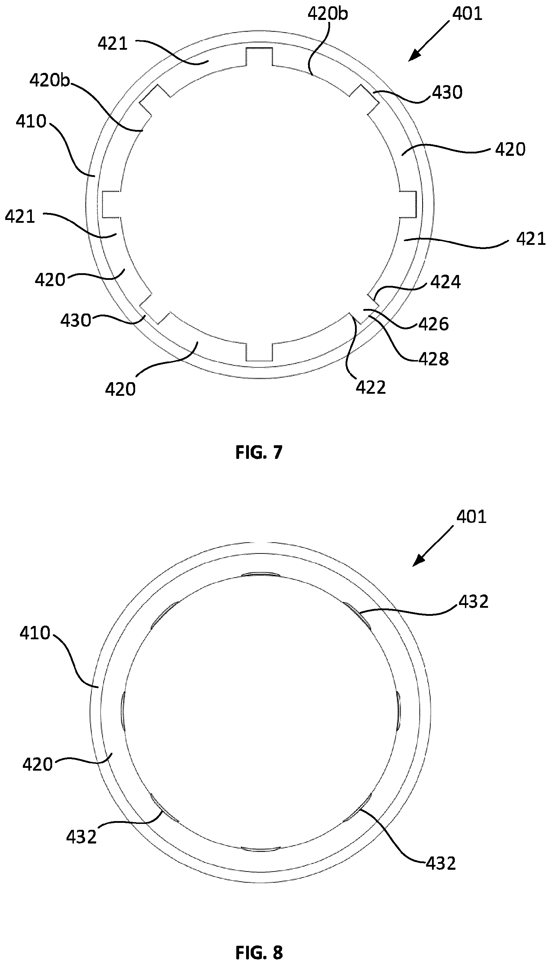

Figures 7 and 8 show a sealing plug 401 that is substantially the same as sealing plug 201 in Figure 3, having an engagement portion 420b that is formed from a series of eight teeth members 421 and eight grooves 430. The body member 450 is removed in order to illustrate the sealing function of the sealing plug 401. The annular sealing member 420 melts in substantially the same way as described with reference to Figure 5. The provision of eight teeth members 421 and eight grooves 430 in comparison with twelve teeth members 421 and twelve grooves 430 provides an annular sealing member 420 that is less flexible in comparison. The number of teeth member 421 and grooves 430, the size thereof, and/or the spacing between these features can be selected depending on the desired sealing properties of the sealing plug 401. Moreover, these parameters can be selected based on the desired flexibility of the annular sealing member 420. The required force for inserting the sealing plug 401 in the panel body orifice may be defined by the grooved surface profile of the engagement portion 420b.

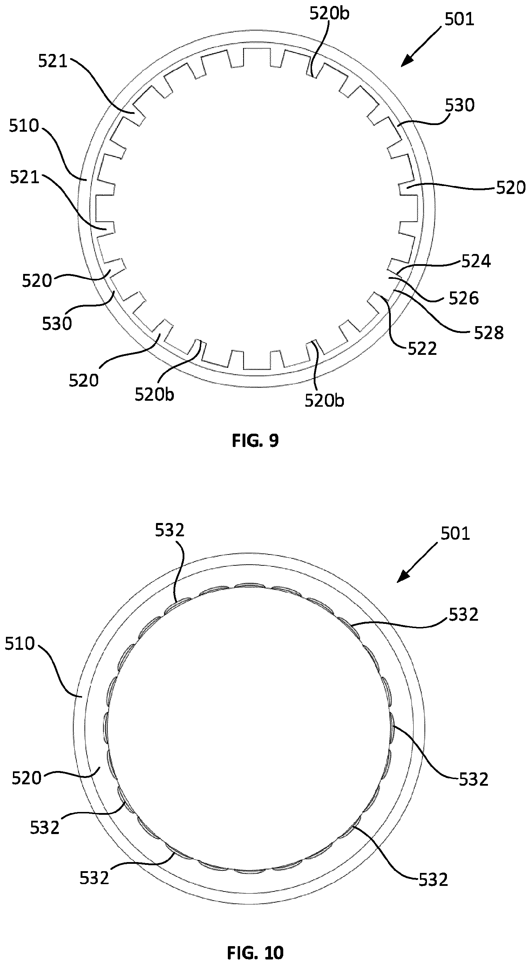

Figures 9 and 10 show a sealing plug 501 that is substantially the same as sealing plug 301 in Figures 4 and 5. However, the engagement portion 520b of the annular sealing member 520 is provided with a grooved surface profile that is formed of a plurality of teeth members 521 and grooves 530. In this embodiment, there are provided 24 teeth members 521 and 24 grooves 530. Each groove 530 is arranged between two consecutive teeth members 521. The teeth members 521 and the grooves 530 alternate around the entire perimeter of the annular sealing member 520. With reference in particular to Figure 10, when the annular sealing member 520 melts, the grooves 530 between the teeth members 521 are filled at a region generally denoted by the numeral 532. This provides an increased sealing engagement between the annular sealing member 520 and the panel body. It is envisaged that the engagement portion 520b may be provided with an increased number of teeth members 521 and grooves 530 and/or the provision of decreased spacing therebetween, such that the melt fills consecutive grooves 530 and contacts melt material filling neighbouring grooves 530. This provides a melt material around the whole perimeter of the annular sealing member 520, further improving the sealing properties of the sealing plug 501.

It has been found that for some conventional sealing plugs with a grooved surface profile, the force required for "push-in" is generally higher. It has been found that the insertion force required for various designs of sealing plugs not having a grooved surface profile is higher than a sealing plug having a grooved surface profile. It has been found that in some cases, the provision of a grooved surface profile has reduced the required representing an insertion force by about 30%. Therefore, it has been found and tested that the provision of a grooved surface profile on a sealing plug reduces the insertion force required for insertion the sealing plug into an opening of a panel body, making the insertion and removal of such sealing plugs easier and quicker.

Through the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract or drawings), or to any novel one, or any novel combination, of the steps of any method or process so disclosed.

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible.

## Claims

1. A sealing plug (101, 201, 301, 401, 501) for engagement with an orifice of a panel body to seal against the passage of fluid therethrough, comprising:
a body member (150, 250, 350, 450) having a central axis (151) extending therethrough, and having a collar portion (152, 252) protruding radially outward from an outer surface of said body member (150, 250, 350, 450) with respect to said central axis (151); and
an annular sealing member (120, 220, 320, 420, 520) fixedly attached to a lower surface of said collar portion (152, 252) coaxial with said central axis (151), having a base portion (120a, 220a), configured to fixedly engage with said lower surface of said collar portion (152, 252), and an engagement portion (120b, 220b, 320b, 420b, 520b) facing away from said lower surface and adapted to sealingly engage with the panel body, during use,
**characterised in that** said engagement portion (120b, 220b, 320b, 420b, 520b) is provided with a grooved surface profile (130, 230, 330, 430, 530) comprising a plurality of spaced apart teeth members (321, 421, 521) spaced apart from one another along an entire perimeter of said annular sealing member (120, 220, 320, 420, 520).

2. A sealing plug (101, 201, 301, 401, 501) according to claim 1, wherein said plurality of teeth members (321, 421, 521) are equidistantly spaced apart from one another along the entire perimeter of said annular sealing member (120, 220, 320, 420, 520).

3. A sealing plug (101, 201, 301, 401, 501) according to any one of the preceding claims, wherein said plurality of teeth members (321, 421, 521) protrude from said base portion (120a, 220a) in a direction substantially parallel to said central axis (151) so as to form radially aligned grooves between said plurality of teeth members (321, 421, 521).

4. A sealing plug (101, 201, 301, 401, 501) according to any one of the preceding claims, wherein said base portion (120a 220a) and said plurality of teeth members (321, 421, 521) are integral parts of said annular sealing member (120, 220, 320, 420, 520).

5. A sealing plug (101, 201, 301, 401, 501) according to any one of the preceding claims, wherein said base portion (120a, 220a) has a predetermined thickness.

6. A sealing plug (101, 201, 301, 401, 501) according to any one of the preceding claims, wherein, when in use, said annular sealing member (120, 220, 320, 420, 520) is resiliently deformable in a direction parallel to said central axis (151) by applying a predetermined insertion force to said sealing plug.

7. A sealing plug (101, 201, 301, 401, 501) according to claim 6, wherein said predetermined insertion force is defined by said grooved surface profile (130, 230, 330, 430, 530) of said engagement portion (120b, 220b, 320b, 420b, 520b).

8. A sealing plug (101, 201, 301, 401, 501) according to any one of the preceding claims, wherein said annular sealing member (120, 220, 320, 420, 520) is configured to melt at a predetermined temperature so as to fill any gaps between said sealing plug and said panel body during engagement.

## Patentansprüche

1. Dichtungsstopfen (101, 201, 301, 401, 501) zum Eingriff mit einer Öffnung eines Plattenkörpers, um gegen einen Durchgang von Fluid durch diesen abzudichten, aufweisend:
ein Körperelement (150, 250, 350, 450) mit einer Mittelachse (151), die sich durch dieses hindurch erstreckt, und mit einem Kragenabschnitt (152, 252), der von einer Außenfläche des Körperelements (150, 250, 350, 450) in Bezug auf die Mittelachse (151) radial nach außen vorsteht; und
ein ringförmiges Dichtungselement (120, 220, 320, 420, 520), das fest an einer unteren Fläche des Kragenabschnitts (152, 252) koaxial zu der Mittelachse (151) angebracht ist, mit einem Basisabschnitt (120a, 220a), der für einen festen Eingriff mit der unteren Fläche des Kragenabschnitts (152, 252) konfiguriert ist, und einem Eingriffsabschnitt (120b, 220b, 320b, 420b, 520b), der von der unteren Fläche abgewandt ist und so ausgelegt ist, dass er den Plattenkörper, während des Gebrauchs, abdichtend in Eingriff nimmt,
**dadurch gekennzeichnet, dass** der Eingriffsabschnitt (120b, 220b, 320b, 420b, 520b) mit einem gerillten Oberflächenprofil (130, 230, 330, 430, 530) bereitgestellt ist, das eine Vielzahl von beabstandeten Zahnelementen (321, 421, 521) aufweist, die entlang eines gesamten Umfangs des ringförmigen Dichtungselements (120, 220, 320, 420, 520) voneinander beabstandet sind.

2. Dichtungsstopfen (101, 201, 301, 401, 501) nach Anspruch 1, wobei die Vielzahl von Zahnelementen (321, 421, 521) entlang des gesamten Umfangs des ringförmigen Dichtungselements (120, 220, 320, 420, 520) äquidistant voneinander beabstandet sind.

3. Dichtungsstopfen (101, 201, 301, 401, 501) nach einem der vorhergehenden Ansprüche, wobei die Vielzahl von Zahnelementen (321, 421, 521) in einer Richtung im Wesentlichen parallel zu der Mittelachse (151) von dem Basisabschnitt (120a, 220a) vorstehen, sodass sie radial ausgerichtete Rillen zwischen der Vielzahl von Zahnelementen (321, 421, 521) bilden.

4. Dichtungsstopfen (101, 201, 301, 401, 501) nach einem der vorhergehenden Ansprüche, wobei der Basisabschnitt (120a, 220a) und die Vielzahl von Zahnelementen (321, 421, 521) einstückige Teile des ringförmigen Dichtungselements (120, 220, 320, 420, 520) sind.

5. Dichtungsstopfen (101, 201, 301, 401, 501) nach einem der vorhergehenden Ansprüche, wobei der Basisabschnitt (120a, 220a) eine vorbestimmte Dicke aufweist.

6. Dichtungsstopfen (101, 201, 301, 401, 501) nach einem der vorhergehenden Ansprüche, wobei das ringförmige Dichtungselement (120, 220, 320, 420, 520), während des Gebrauchs, durch Ausüben einer vorbestimmten Einsetzkraft auf den Dichtungsstopfen in einer Richtung parallel zu der Mittelachse (151) elastisch verformbar ist.

7. Dichtungsstopfen (101, 201, 301, 401, 501) nach Anspruch 6, wobei die vorbestimmte Einsetzkraft durch das gerillte Oberflächenprofil (130, 230, 330, 430, 530) des Eingriffsabschnitts (120b, 220b, 320b, 420b, 520b) definiert wird.

8. Dichtungsstopfen (101, 201, 301, 401, 501) nach einem der vorhergehenden Ansprüche, wobei das ringförmige Dichtungselement (120, 220, 320, 420, 520) so konfiguriert ist, dass es bei einer vorbestimmten Temperatur schmilzt, um während des Eingriffs jegliche Spalte zwischen dem Dichtungsstopfen und dem Plattenkörper zu füllen.

## Revendications

1. Bouchon d'étanchéité (101, 201, 301, 401, 501) pour engagement dans un orifice d'un corps de panneau pour assurer l'étanchéité contre le passage de fluide à travers celui-ci, comprenant :
un élément de corps (150, 250, 350, 450) ayant un axe central (151) s'étendant à travers celui-ci, et ayant une partie de collier (152, 252) faisant saillie radialement vers l'extérieur à partir d'une surface externe dudit élément de corps (150, 250, 350, 450) par rapport audit axe central (151) ; et
un élément d'étanchéité annulaire (120, 220, 320, 420, 520) attaché fixement à une surface inférieure de ladite partie de collier (152, 252) coaxialement audit axe central (151), ayant une partie de base (120a, 220a), configurée pour s'engager fixement avec ladite surface inférieure de ladite partie de collier (152, 252), et une partie d'engagement (120b, 220b, 320b, 420b, 520b) faisant face à l'opposé de ladite surface inférieure et adaptée pour s'engager de manière étanche avec le corps de panneau, en cours d'utilisation,
**caractérisé en ce que** ladite partie d'engagement (120b, 220b, 320b, 420b, 520b) est fournie avec un profil de surface rainuré (130, 230, 330, 430, 530) comprenant une pluralité d'éléments de dents espacés (321, 421, 521) espacés les uns des autres le long d'un périmètre entier dudit élément d'étanchéité annulaire (120, 220, 320, 420, 520).

2. Bouchon d'étanchéité (101, 201, 301, 401, 501) selon la revendication 1, dans lequel ladite pluralité d'éléments de dents (321, 421, 521) sont espacés de manière équidistante les uns des autres le long du périmètre entier dudit élément d'étanchéité annulaire (120, 220, 320, 420, 520).

3. Bouchon d'étanchéité (101, 201, 301, 401, 501) selon l'une quelconque des revendications précédentes, dans lequel ladite pluralité d'éléments de dents (321, 421, 521) font saillie à partir de ladite partie de base (120a, 220a) dans une direction sensiblement parallèle audit axe central (151) de manière à former des rainures alignées radialement entre ladite pluralité d'éléments de dents (321, 421, 521).

4. Bouchon d'étanchéité (101, 201, 301, 401, 501) selon l'une quelconque des revendications précédentes, dans lequel ladite partie de base (120a, 220a) et ladite pluralité d'éléments de dents (321, 421, 521) font partie intégrante dudit élément d'étanchéité annulaire (120, 220, 320, 420, 520).

5. Bouchon d'étanchéité (101, 201, 301, 401, 501) selon l'une quelconque des revendications précédentes, dans lequel ladite partie de base (120a, 220a) a une épaisseur prédéterminée.

6. Bouchon d'étanchéité (101, 201, 301, 401, 501) selon l'une quelconque des revendications précédentes, dans lequel, en utilisation, ledit élément d'étanchéité annulaire (120, 220, 320, 420, 520) est déformable élastiquement dans une direction parallèle audit axe central (151) par l'application d'une force d'insertion prédéterminée audit bouchon d'étanchéité.

7. Bouchon d'étanchéité (101, 201, 301, 401, 501) selon la revendication 6, dans lequel ladite force d'insertion prédéterminée est définie par ledit profil de surface rainuré (130, 230, 330, 430, 530) de ladite partie d'engagement (120b, 220b, 320b, 420b, 520b).

8. Bouchon d'étanchéité (101, 201, 301, 401, 501) selon l'une quelconque des revendications précédentes, dans lequel ledit élément d'étanchéité annulaire (120, 220, 320, 420, 520) est configuré pour fondre à une température prédéterminée de manière à remplir tout espace entre ledit bouchon d'étanchéité et ledit corps de panneau durant l'engagement.
